**Europäisches Patentamt**

**European Patent Office**

**Office européen des brevets**

(19)

(11) Veröffentlichungsnummer : **0 310 546 B1**

(12)
# EUROPÄISCHE PATENTSCHRIFT

(45) Veröffentlichungstag der Patentschrift :
**04.03.92 Patentblatt 92/10**

(51) Int. Cl.⁵ : **F16B 12/36**

(21) Anmeldenummer : **88810616.8**

(22) Anmeldetag : **12.09.88**

(54) **Variable Montagerahmen-Anordnung.**

(30) Priorität : **29.09.87 CH 3780/87**

(43) Veröffentlichungstag der Anmeldung :
**05.04.89 Patentblatt 89/14**

(45) Bekanntmachung des Hinweises auf die
Patenterteilung :
**04.03.92 Patentblatt 92/10**

(84) Benannte Vertragsstaaten :
**CH DE FR GB IT LI SE**

(56) Entgegenhaltungen :
**AT-B- 295 406**
**CH-A- 376 623**
**FR-A- 1 304 947**
**FR-A- 2 261 690**

(73) Patentinhaber : **LANZ OENSINGEN AG**
**Südringstrasse**
**CH-4702 Oensingen (CH)**

(72) Erfinder : **Mühlethaler, Erhard**
**CH-3314 Schalunen (CH)**

(74) Vertreter : **Kägi, Otto**
**Patentanwalt Hinterbergstrasse 36 Postfach**
**CH-6330 Cham (CH)**

EP 0 310 546 B1

Jouve, 18, rue Saint-Denis, 75001 PARIS

## Beschreibung

Die Erfindung betrifft eine variable Montagerahmen-Anordnung mit Durchbrechungen aufweisenden Vierkant-Hohlprofilabschnitten und lösbaren Verbindern für jeweils zwei solcher Profilabschnitte, wobei die Verbindung durch Spreizwirkung an den Verbindern herstellbar ist.

Montagerahmen dieser Art werden z.B. im Schalttafelbau, für Gestelle und Lagereinrichtungen, in der Hausinstallationstechnik, für Apparateschränke usw. benötigt. Sie werden herkömmlicherweise aus gelochten Winkel- oder U-Profilabschnitten, gegebenenfalls unter Verwendung besonderer Eckverbinder, zusammengeschraubt. Der Zusammenbau durch Verschrauben ist allerdings ziemlich zeitraubend, und vorstehende Muttern und Schraubenköpfe können die Verwendung des Montagerahmens beeinträchtigen. Infolge Ueberlappung der Profilabschnitte an den Ecken sind sie zueinander versetzt, bilden also keine ebenen Rahmen, und vorspringende Profilecken oder -Kanten können eine Gefahr darstellen und die Benützung ebenfalls erschweren.

Bei einer bekannten Anordnung der eingangs genannten Art (AT-B 295 406) können zwei Vierkant-Hohlprofile mit gleichem Querschnitt winklig und ohne Ueberlappung miteinander verbunden werden. Die zu verbindenden Profile sind jedoch verschieden, indem das eine an allen vier Seiten mit quadratischen Fenstern, das andere an einer Seite mit einem Längsschlitz (übrige Seiten geschlossen) versehen ist. Der Verbinder hierfür weist zwei Klötze auf, die in das geschlitzte Profil längs eingeschoben werden und darin mittels einer Druckschraube verspreizt werden können. Zwei von je einem der Klötze schief abstehende Blechlappen greifen dabei von aussen in ein Fenster des anderen Profils ein. Eine solche Verbindung kann jedoch kaum nennenswerte Belastungen aufnehmen, da einerseits zwischen den Blechlappen und dem Fenster praktisch nur Kantenberührung besteht und anderseits der Verbinder durch die Verspreizung im anderen Profil nur unzulänglich gegen Zugeinwirkung gesichert ist.

Aufgabe der Erfindung ist es, unter Vermeidung der vorgenannten Nachteile eine vielseitig verwendbare und hoch belastbare Montagerahmen-Anordnung zu schaffen, welche mit einer einzigen Profilart und möglichst wenig verschiedenartigen Teilen auskommt und sich rasch und einfach in vielfältigen Variationen nach Bedarf zusammenbauen lässt. Die Lösung dieser Aufgabe besteht darin, dass das Vierkant-Hohlprofil der beiden zu verbindenden Profilabschnitte an der einen Seite mit einem Längsschlitz und mindestens an beiden angrenzenden Seiten mit Sperrmitteln gegen Längsverschiebung versehen ist, und dass die Verbinder zwei mit Spreizorganen versehene Paare von Schenkeln aufweisen, deren Breite quer zur Spreizrichtung der Profil-Innenweite angepasst ist und die je in das Innere eines Hohlprofil-Abschnittes einsetzbar sind, um bei anschliessender Spreizung an der Aussenseite der Schenkel vorhandene Rastorgane mit den genannten Sperrmitteln in Eingriff zu bringen und gleichzeitig Formschluss mit den vier Profil-Innenwänden herzustellen.

Bei einer solchen Montagerahmen-Anordnung entstehen an den Verbindungsstellen der Hohlprofilabschnitte weder Ueberlappungen noch vorstehende Teile. Die Verbindungen erreichen dank Formschlüssigkeit eine hohe Stabilität, und die Profilabschnitte sind nach der Montage von selbst rechtwinklig bzw. parallel zueinander ausgerichtet. Mit entsprechend gestalteten Verbindern lassen sich sowohl ebene Rahmen wie auch räumliche (dreidimensionale) Gebilde aufbauen. Dabei kommt man mit einer erstaunlich geringen Zahl von verschiedenartigen Teilen und insbesondere mit nur einem Profil aus, was die Anwendung wesentlich vereinfacht, aber auch die Herstell- und Lagerhaltungskosten gering hält.

In den Patentansprüchen 2 bis 17 sind zweckmässige weitere Ausgestaltungen der im Anspruch 1 definierten Erfindung angegeben, während die Ansprüche 18 bis 24 sich auf das Vierkant-Hohlprofil beziehen.

Nachstehend werden Ausführungsbeispiele der Erfindung im Zusammenhang mit der Zeichnung näher erläutert.

Fig. 1 zeigt in Ansicht einen Ausschnitt eines systemgemässen, nach Bedarf zusammengebauten, ebenen Montagerahmens,

Fig. 2 zeigt in einem grösseren Massstab einen Schnitt entlang der Linie II - II in Fig. 1, wobei der parallel zur Zeichnungsebene verlaufende Profilabschnitt weggelassen ist,

Fig. 3 und Fig. 4 zeigen ein einzelnes Winkelstück eines Eckverbinders in Frontal- bzw. Seitenansicht,

Fig. 5 bis 7 zeigen drei aufeinanderfolgende Phasen beim Einsetzen eines Eckverbinders in den Längsschlitz eines Hohlprofil-Abschnittes,

Fig. 8 zeigt einen in einen Profilabschnitt eingesetzten Eckverbinder mit einer Variante bezüglich der Sperrmittel gegen Längsverschiebung,

Fig. 9 und 10 zeigen in Front- bzw. Seitenansicht ein Beispiel eines Spreizorgans in Form einer gewellten Blattfeder.

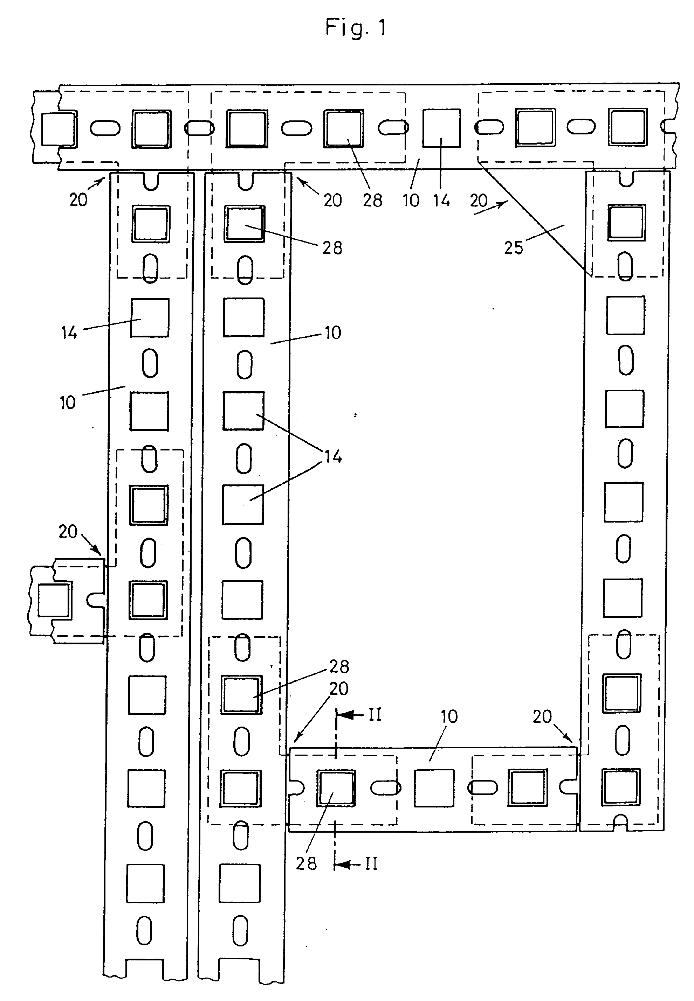

Wie der Ausschnitt eines ebenen Montagerahmens nach Fig. 1 zeigt, enthält die Anordnung nach Bedarf abgelängte Vierkant-Hohlprofilabschnitte 10, welche mittels Eckverbindern 20 starr, jedoch lösbar miteinander verbunden sind. Wie ersichtlich, können an beliebigen Stellen einer gegebenen Längsteilung des Hohlprofils Eckverbinder 20 eingesetzt und mit einem Ende eines rechtwinklig abstehenden Profilabschnittes verbunden werden. Auf diese Weise lassen sich nach Bedarf auch Zwischenrahmen bilden oder parallele, benachbarte Profilabschnitte einsetzen.

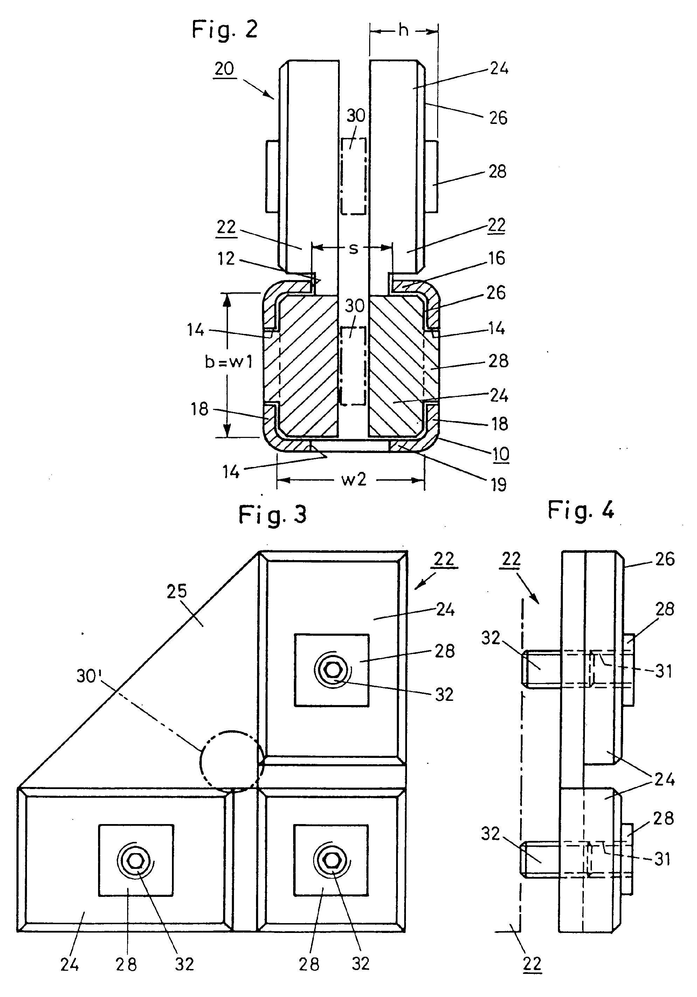

Das Profil, aus dem die Abschnitte 10 bestehen, ist ein Vierkant-Hohlprofil, vorzugsweise ein quadratisches Profil, dessen Querschnitt aus Fig. 2 ersichtlich ist. Die eine Profilseite 16 weist einen durchgehenden Längsschlitz 12 auf, während die beiden an die geschlitzte Seite 16 angrenzenden Profilseiten 18 mit je gegenüberliegenden, vorzugsweise quadratischen Durchbrechungen 14 in regelmässiger Teilung versehen sind. Auch die der geschlitzten Seite 16 gegenüberliegende Seite 19 weist zweckmässigerweise Durchbrechungen 14 in gleicher Teilung auf. Die Durchbrechungen 14 bilden Sperrmittel gegen Längsverschiebungen der nachstehend beschriebenen Verbinder 20 oder 40, die mit entsprechenden Rastorganen für den Eingriff in die Sperrmittel versehen sind.

Die hier verwendeten Eckverbinder 20 bestehen jeweils aus einem Paar von im wesentlichen gleichen Teilen, hier Winkelstücken 22, deren Abstand mittels mindestens einem zwischen diesen liegenden Spreizorgan 30 veränderbar ist; in den Fig. 2, 7 und 8 sind solche Spreizorgane lediglich schematisch mit strichpunktierten Linien angedeutet, zweckmässige Ausgestaltungen werden weiter unten beschrieben.

Die beiden miteinander rechtwinklig verbundenen Schenkel 24 der Winkelstücke 22 lassen sich einzeln durch den Längsschlitz 12 in das Innere des Hohlprofils 10 einsetzen und sitzen dann formschlüssig zwischen den Wänden 16 und 19 des Profilabschnittes. An ihrer Aussenseite 26 sind die Schenkel 24 mit je einem Nocken 28 versehen. Diese Nocken sind als Rastorgane zum Eingreifen in Durchbrechungen 14 von innen her bestimmt, wenn die Schenkel 24 soweit gespreizt sind, dass ihre Aussenseiten innen an den Profilwänden 18 anliegen; der Eingriff der Nocken 28 verhindert dann jegliche Längsverschiebung zwischen Verbinder und Profil. Die Durchbrechungen 14 und die Nocken 28 sind vorzugsweise, wie dargestellt, quadratisch und ineinanderpassend gestaltet, jedoch sind durchaus auch abweichende Formen denkbar. Vorzugsweise ist am Profil 10 die Schlitzbreite s gleich der Seitenlänge der quadratischen Durchbrechungen 14 gewählt. Ebenso ist es zweckmässig, wenn die Höhe der Nocken 28 höchstens gleich der Profil-Wandstärke ist (Fig. 2), so dass die Nocken nicht über die Aussenseite des Profils vorstehen. Der erwähnte Formschluss zwischen Verbinder und Profil, dank welchem die Verbindung erhebliche Biegekräfte aufnehmen kann, kommt dadurch zustande, dass die Breite b der Schenkel 24 der Profil-Innenweite w1 zwischen der Seite 16 mit dem Längsschlitz und der ihr gegenüberliegenden Profilseite 19 angepasst ist. Mit dem Eingriff der Nocken 28 in die Durchbrechungen 14 kommt gleichzeitig auch Formschluss zwischen den Schenkel-Aussenseiten 26 und den Profil-Innenwänden 18 zustande.

Bei einer Variante des Winkelstücks 22 können dessen beide Schenkel 24 durch eine sie verbindende, angeformte Wand 25 verstrebt sein (rechts oben in Fig 1, in Fig. 3 und 4 strichpunktiert eingetragen), wodurch sich die Stabilität erhöhen lässt oder zusätzliche Montagemöglichkeiten vorgesehen werden können. Gemäss Fig 2. und 7 weist jeder Eckverbinder 20 zwei Spreizorgane 30 auf, die je im Bereich eines von zwei gegenüberliegenden Schenkeln 24 gebildeten Schenkelpaares angeordnet sind Es ist jedoch möglich, gemäss Fig. 3 mit einem einzigen Spreizorgan 30' je Eckverbinder auszukommen, welches gleichzeitig auf alle vier Schenkel bzw. beide Schenkelpaare des Verbinders einwirkt.

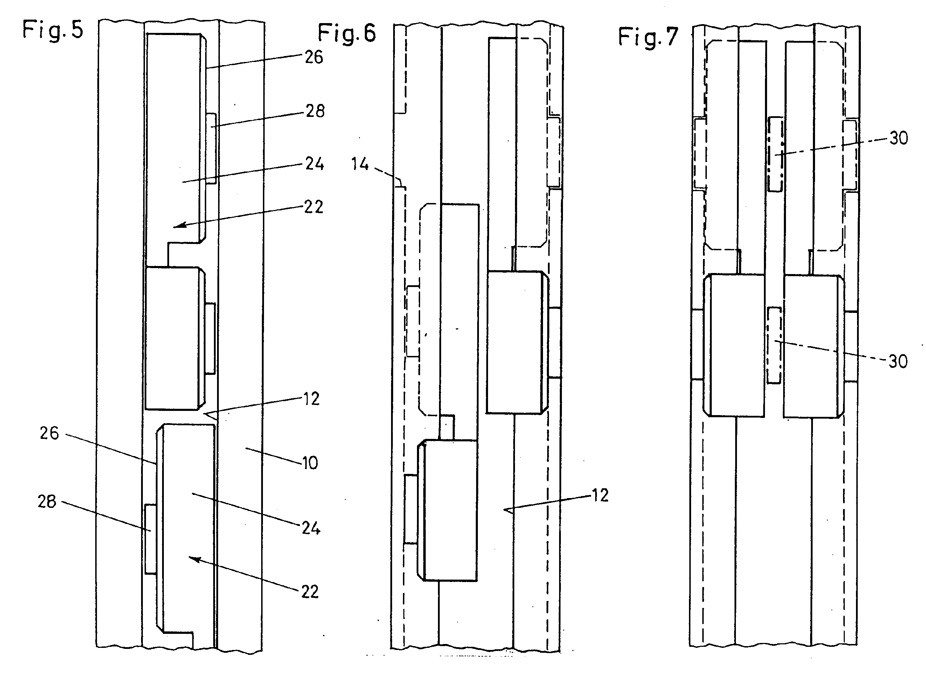

Aus den Fig. 5 bis 7 gehen die wesentlichen Schritte bei der Montage eines Eckverbinders an einem Profilabschnitt 10 hervor. Gemäss Fig. 5 wird zunächst von jedem Winkelstück 22 des Eckverbinders der eine Schenkel 24 durch den Schlitz 12 in das Innere des Hohlprofils eingeführt, wobei die beiden Winkelstücke zueinander längsversetzt sind. Zu diesem Zweck ist die Höhe h der Schenkel 24 einschliesslich Rastorgan (Nocken 28) etwas geringer als die Breite s des Schlitzes 12 (siehe Fig. 2). Anschliessend wird nach Fig. 6 das eine Winkelstück seitwärts verschoben, damit am eingesetzten Schenkel die Aussenseite 26 am Profil anliegt und der Nocken 28 in eine Durchbrechung 14 eingreift; das zweite Winkelstück 22 des Paares kann dann in Längsrichtung verschoben und auf gleiche Höhe wie das erste Winkelstück gebracht werden. Schliesslich wird zwischen den im Profil befindlichen Schenkeln 24 bzw. deren Innenseiten das Spreizorgan 30 zur Wirkung gebracht, so dass beide Nocken in gegenüberliegende Durchbrechungen eingreifen und der Eckverbinder durch Formschluss an allen vier Profil-Innenwänden fest verankert ist. Das andere Schenkelpaar des Eckverbinders ragt dann senkrecht aus dem Profilabschnitt heraus. Ein zweiter Profilabschnitt lässt sich dann mit diesen Schenkeln des Eckverbinders zusammenfügen, indem beide Winkelstücke vorübergehend - entgegen dem Spreizorgan 30 - wieder etwas zusammengeschoben und der zweite Profilabschnitt vom Ende her in Längsrichtung über die abstehenden Schenkel geführt wird. Nach erneutem Spreizen der Winkelstücke, gegebenenfalls mit Einwirkung des zweiten Spreizorgans, sind beide Schenkelpaare des Eckverbinders in gleicher Weise formschlüssig und gegen Längsverschiebung gesichert mit den beiden Profilabschnitten verriegelt und die Verbindung ist starr.

Aus den Fig. 3 und 4 ist, am Beispiel des Winkelverbinders 20, eine konkrete Ausführungsform eines Spreizorgans ersichtlich: In der einen Verbinder-Hälfte 22 sind jeweils im Bereich der Nocken 28 durchgehende Gewindebohrungen 31 vorgesehen, während solche Bohrungen in der anderen Hälfte 22 (strichpunktiert in Fig.

4 angedeutet) fehlen. In jeder Gewindebohrung 31 versenkt sitzt eine Druckschraube 32, welche gegen die andere Hälfte 22 anstellbar ist. Bei der Montage des Verbinders sind die Schrauben 32 zunächst im Innern der Bohrungen 31 "eingezogen". Sie lassen sich nach dem Einfügen der Verbinderschenkel bequem von aussen gegen die andere Hälfte anstellen und festziehen. Die Schenkel sind dann im Inneren des Profils gespreizt und mit Nockeneingriff verspannt.

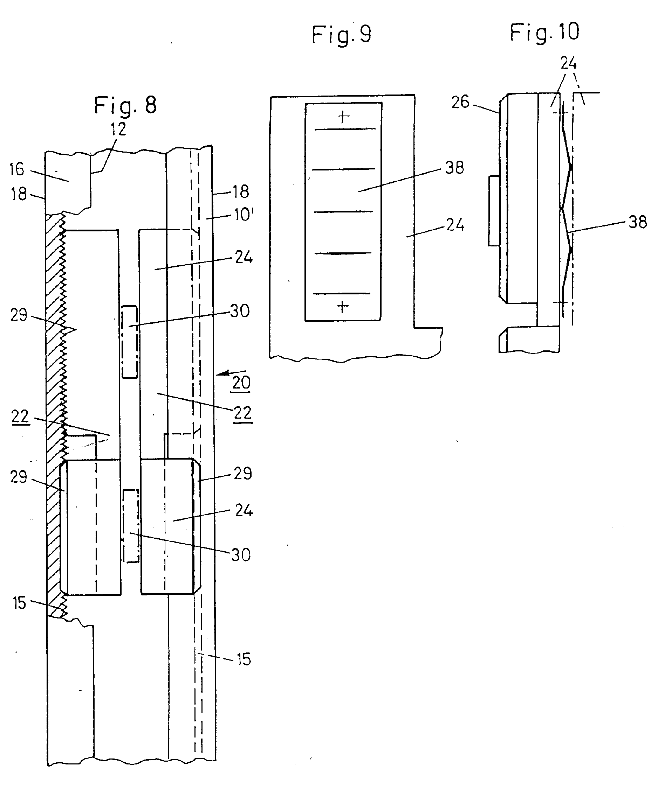

Ein weiteres (schraubenloses) Spreizorgan ist aus den Fig. 9 und 10 ersichtlich. Es ist durch eine gewellte Blattfeder 38 gebildet, die an der Innenseite des einen Schenkels 24 angebracht ist. Sie hält die beiden zugeordneten, im Profil eingesetzten Schenkel selbsttätig gespreizt, lässt sich jedoch zwecks Lösen des Nockeneingriffs von aussen her zusammendrücken. Weitere Ausführungsarten von Spreizorganen 30 sind z.B. in Form von Keilen, Exzentern o.dgl. denkbar.

Die Fig. 8 veranschlaulicht, ebenfalls an einem Winkelverbinder 20′ eine andere Ausführungsform von Sperrmitteln gegen Längsverschiebung anstelle von Nocken und Durchbrechungen. Hier weist das Hohlprofil 10′ - mindestens an den an die Seite 16 mit dem Längsschlitz 12 angrenzenden Seiten 18 - innen eine zur Profil-Längsrichtung quer stehende Rillung 15 auf. Dieser entsprechend sind die Schenkel 24 des Verbinders 20′ an ihrer Aussenseite mit einer Querrillung 29 versehen, die bei Anlage an der Profil-Innenseite in die Rillung 15 eingreift und so als Rastorgan eine Längsverschiebung zwischen Verbinder und Profil verhindert. Auch das Profil 10′ mit Rillung 15 kann zweckmässigerweise, obwohl in Fig. 8 nicht dargestellt, ebenfalls mit Durchbrechungen mindestens an den Seiten 18 versehen sein.

Bei einer weiteren, nicht bildlich dargestellten Variante besteht der Verbinder wiederum aus zwei im wesentlichen gleichen Teilen, deren Abstand mittels Spreizorganen, z.B. zwei Druckschrauben, veränderbar ist. Abweichend vom bisher beschriebenen Winkelverbinder weist nach dieser Variante jedoch jeder Teil zwei in gerader Linie miteinander fluchtende Schenkel auf. Der Verbinder ist dazu bestimmt, zwei Profilabschnitte in gerader Linie miteinander zu verbinden. Wenn er mit dem einen Schenkelpaar bereits im einen Profilabschnitt eingesetzt ist, kann der zweite Abschnitt anschliessend (bei nicht gespreiztem Zustand der Teile) auf das zweite Schenkelpaar aufgeschoben werden, worauf schliesslich die formschlüssige und gegen Zugbelastung gesicherte Verbindung durch Spreizen der genannten Druckschrauben hergestellt wird.

Als Spreizorgane für die Teile des vorgenannten Verbinders kommen ausser Druckschrauben auch alle anderen weiter oben beschriebenen Möglichkeiten in Frage. Als Sperrmittel gegen Längsverschiebung und entsprechende Rastorgane sind sodann auch Querrillen 15 bzw. 29 gemäss Fig. 8 denkbar.

Dank dem Umstand, dass es sich um ein quadratisches Hohlprofil handelt und Sperrmittel (Durchbrechungen 14) auch an der dem Längsschlitz 12 gegenüberliegenden Profilseite 19 (Fig. 2) vorhanden sind, können die Profilabschnitte 10 in beliebiger Drehlage mit den Verbindern zusammengefügt werden. Bei der vorgenannten Variante kann also der Längsschlitz 12 am einen Profilabschnitt 10 zum Längsschlitz am anderen Abschnitt um 90° nach der einen oder anderen Seite versetzt sein. Dasselbe ist im übrigen auch bei den Winkelverbindern 20 der weiter oben beschriebenen Beispiele möglich. Dadurch können nicht nur in einer Ebene liegende Rahmen nach Fig. 1, sondern auch räumliche Rahmengebilde zusammengefügt werden.

## Patentansprüche

1. Variable Montagerahmen-Anordnung mit Durchbrechungen aufweisenden Vierkant-Hohlprofilabschnitten und lösbaren Verbindern für jeweils zwei solcher Profilabschnitte, wobei die Verbindung durch Spreizwirkung an den Verbindern herstellbar ist, dadurch gekennzeichnet, dass das Vierkant-Hohlprofil der beiden zu verbindenden Profilabschnitte (10) an der einen Seite (16) mit einem Längsschlitz (12) und mindestens an beiden angrenzenden Seiten (18) mit Sperrmitteln (14, 15) gegen Längsverschiebung versehen ist, und dass die Verbinder (20, 40) zwei mit Spreizorganen (30, 32, 38) versehene Paare von Schenkeln (24) aufweisen, deren Breite (b) quer zur Spreizrichtung der Profil-Innenweite (w1) angepasst ist und die je in das Innere eines Hohlprofil-Abschnittes (10) einsetzbar sind, um bei anschliessender Spreizung an der Aussenseite der Schenkel (24) vorhandene Rastorgane (28, 29) mit den genannten Sperrmitteln (14, 15) in Eingriff zu bringen und gleichzeitig Formschluss mit den vier Profil-Innenwänden herzustellen.

2. Montagerahmen-Anordnung nach Anspruch 1, dadurch gekennzeichnet, dass das Vierkant-Hohlprofil (10) ein quadratisches Profil ist.

3. Montagerahmen-Anordnung nach Anspruch 1 oder 2, dadurch gekennzeichnet, dass als Sperrmittel an den Seiten (18) des Hohlprofils (10) in regelmässiger Teilung angeordnete Durchbrechungen (14) vorhanden sind.

4. Montagerahmen-Anordnung nach Anspruch 3, dadurch gekennzeichnet, dass die Durchbrechungen (14) quadratisch sind.

5. Montagerahmen-Anordnung nach Anspruch 4, dadurch gekennzeichnet, dass die Breite (s) des Längsschlitzes (12) gleich der Seitenlänge der quadratischen Durchbrechungen ist.

6. Montagerahmen-Anordnung nach einem der vorangehenden Ansprüche, dadurch gekennzeichnet, dass als Sperrmittel an wenigstens zwei gegenüberliegenden Profilseiten (18) des Hohlprofils (10′) innen eine zur Profil-Längsrichtung quer stehende Rillung (15) vorhanden ist.

7. Montagerahmen-Anordnung nach einem der vorangehenden Ansprüche, dadurch gekennzeichnet, dass die Verbinder (20, 40) je aus einem Paar von im wesentlichen gleichen Teilen (22) gebildet sind, deren Abstand mittels mindestens einem Spreizorgan (30, 32, 38) veränderbar ist.

8. Montagerahmen-Anordnung nach Anspruch 7, dadurch gekennzeichnet, dass die Verbinder-Teile Winkelstücke (22) mit zwei rechtwinklig verbundenen Schenkeln (24) sind.

9. Montagerahmen-Anordnung nach Anspruch 8, dadurch gekennzeichnet, dass die beiden Schenkel (24) der Winkelstücke (22) durch eine sie verbindende Wand (25) verstrebt sind.

10. Montagerahmen-Anordnung nach Anspruch 7, dadurch gekennzeichnet, dass jeder Teil des Paares zwei in gerader Linie miteinander fluchtende Schenkel aufweist.

11. Montagerahmen-Anordnung nach Anspruch 3 und einem der Ansprüche 7 bis 10, dadurch gekennzeichnet, dass die Rastorgane an der Aussenseite der Schenkel (24) durch in die Durchbrechungen (14) eingreifende Nocken (28) gebildet sind.

12. Montagerahmen-Anordnung nach Anspruch 11, dadurch gekennzeichnet, dass die Höhe der Nocken (28) höchstens gleich der Profil-Wandstärke ist.

13. Montagerahmen-Anordnung nach Anspruch 6 und einem der Ansprüche 7 bis 10, dadurch gekennzeichnet, dass die Schenkel (24) der Verbinder (20′) als Rastorgane an ihrer Aussenseite eine in die Rillung (15) am Profil (10′) eingreifende Querrillung (29) aufweisen.

14. Montagerahmen-Anordnung nach einem der Ansprüche 8, 9 oder 10, dadurch gekennzeichnet, dass im Bereich jedes Schenkel-Paares (24) ein Spreizorgan (30, 32, 38) angeordnet ist.

15. Montagerahmen-Anordnung nach Anspruch 7, dadurch gekennzeichnet, dass die Spreizorgane (30) durch eine im einen Teil des Paares sitzende und gegen das andere Teil anstellbare Druckschraube (32) gebildet sind.

16. Montagerahmen-Anordnung nach Anspruch 7, dadurch gekennzeichnet, dass die Spreizorgane (30) durch eine gewellte Blattfeder (38) gebildet sind.

17. Montagerahmen-Anordnung nach Anspruch 11 oder 13, dadurch gekennzeichnet, dass die Höhe (h) der Schenkel (24) einschliesslich Rastorganen (28, 29) geringer ist als die Breite (s) des Längsschlitzes (12).

18. Vierkant-Hohlprofil für eine Montagerahmen-Anordnung, dadurch gekennzeichnet, dass die eine Seite (16) des Hohlprofils (10) einen Längsschlitz (12) aufweist und mindestens die beiden angrenzenden Profilseiten (18) mit von innen her zugänglichen Sperrmitteln (14, 15) gegen Längsverschiebung von eingesetzten Profilverbindern versehen sind.

19. Vierkant-Hohlprofil nach Anspruch 18, dadurch gekennzeichnet, dass es ein quadratisches Profil ist.

20. Vierkant-Hohlprofil nach Anspruch 18 oder 19, dadurch gekennzeichnet, dass als Sperrmittel in regelmässiger Teilung angeordnete Durchbrechungen (14) in den Profilseiten vorhanden sind.

21. Vierkant-Hohlprofil nach Anspruch 20, dadurch gekennzeichnet, dass die Durchbrechungen quadratisch sind.

22. Vierkant-Hohlprofil nach Anspruch 21, dadurch gekennzeichnet, dass die Breite (s) des Längsschlitzes (12) gleich der Seitenlänge der quadratischen Durchbrechungen ist.

23. Vierkant-Hohlprofil nach Anspruch 18 oder 19, dadurch gekennzeichnet, dass als Sperrmittel innen eine zur Profil-Längsrichtung quer stehende Rillung (15) vorhanden ist.

24. Vierkant-Hohlprofil nach einem der Ansprüche 18 bis 23, dadurch gekennzeichnet, dass Sperrmittel (14, 15) an allen nicht vom Längsschlitz (12) eingenommenen Profilseiten (18, 19) vorhanden sind.


**Claims**

1. Variable mounting frame arrangement comprising quadrilateral hollow sectional bar portions having cutouts and detachable connectors for two such sectional bar portions in each case, wherein the connection can be made by expanding action on the connectors, characterised in that the quadrilateral hollow sectional bar of the two sectional bar portions (10) to be joined is provided on one side (16) with a longitudinal slot (12) and at least on both adjoining sides (18) with locking means (14, 15) preventing longitudinal displacement, and that the connectors (20, 40) have two pairs of legs (24) provided with expanders (30, 32, 38), each leg having a width (b), transversely to the expansion direction, adapted to the inside width (w1) of the sectional bar and being insertable into the interior of a hollow sectional bar portion (10) in order, on the subsequent expansion, to bring catch means (28, 29) provided on the outside of the legs (24) into engagement with said locking means (14, 15) and at the same time to bring about a positive connection to the four inner walls of the sectional bar.

2. Mounting frame arrangement according to Claim 1, characterised in that the quadrilateral hollow sectional bar (10) is a square sectional bar.

3. Mounting frame arrangement according to Claim 1 or 2, characterised in that the locking means provided comrise cutouts (14) disposed with regular spacing in the sides (18) of the hollow sectional bar (10).

4. Mounting frame arrangement according to Claim 3, characterised in that the cutouts (14) are sqare.

5. Mounting frame arrangement according to Claim 4, characterised in that the width (s) of the longitudinal slot (12) is equal to the length of the sides of the square cutouts.

6. Mounting frame arrangement according to one of the preceding claims, characterised in that the locking means provided on the inside on at least two sides (18) of the hollow sectional bar (10') which lie opposite one another comprise grooving (15) lying transversely to the longitudinal direction of the sectional bar.

7. Mounting frame arrangement according to one of the preceding claims, characterised in that each of the connectors (20, 40) consists of a pair of substantially identical parts (22) the distance between which is variable with the aid of at least one expander (30, 32, 38).

8. Mounting frame arrangement according to Claim 7, characterised in that the connector parts are angle members (22) comprising two legs (24) connected at right angles.

9. Mounting frame arrangement according to Claim 8, characterised in that the two legs (24) of the angle members (22) are braced by a wall (25) connecting them.

10. Mounting frame arrangement according to Claim 7, characterised in that each part of the pair has two legs in line with one another on a straight line.

11. Mounting frame arrangement according to Claim 3 and one of Claims 7 to 10, characterised in that the catch means on the outside of the legs (24) are formed by bosses (28) engaging in the cutouts (14).

12. Mounting frame arrangement according to Claim 11, characterised in that the height of the bosses (28) is at most equal to the wall thickness of the sectional bar.

13. Mounting frame arrangement according to Claim 6 and one of Claims 7 to 10, characterised in that the legs (24) of the connectors (20') have catch members on their outside in the form of transverse grooving (29) engaging in the grooving (15) on the sectional bar (10').

14. Mounting frame arrangement according to one of Claims 8, 9 or 10, characterised in that an expander (30, 32, 38) is disposed in the region of each pair of legs (24).

15. Mounting frame arrangement according to Claim 7, characterised in that the expanders (30) are formed by a pressing screw (32) mounted in one part of the pair and adjustable against the other part.

16. Mounting frame arrangement according to Claim 7, characterised in that the expanders (30) are formed by a corrugated leaf spring (38).

17. Mounting frame arrangement according to Claim 11 or 13, characterised in that the height (h) of the legs (24) including the catch members (28, 29) is smaller than the width (s) of the longitudinal slot (12).

18. Quadrilateral hollow sectional bar for a mounting frame arrangement, characterised in that one side (16) of the hollow sectional bar (10) has a longitudinal slot (12) and at least the two adjoining sides (18) of the sectional bar are provided with locking means (14, 15) accessible from inside and preventing longitudinal displacement of inserted sectional bar connectors.

19. Quadrilateral hollow sectional bar according to Claim 18, characterised in that it is a square sectional bar.

20. Quadrilateral hollow sectional bar according to Claim 18 or 19, characterised in that the locking means provided consist of cutouts (14) disposed with regular spacing in the sides of the sectional bar.

21. Quadrilateral hollow sectional bar according to Claim 20, characterised in that the cutouts are square.

22. Quadrilateral hollow sectional bar according to Claim 21, characterised in that the width (s) of the longitudinal slot (12) is equal to the length of the sides of the square cutouts.

23. Quadrilateral hollow sectional bar according to Claim 18 or 19, characterised in that the locking means provided on the inside consist of grooving (15) disposed transversely to the longitudinal direction of the sectional bar.

24. Quadrilateral hollow sectional bar according to one of Claims 18 to 23, characterised in that locking means (14, 15) are provided on all sides (18, 19) of the sectional bar which are not provided with a longitudinal slot (12).

## Revendications

1. Agencement variable de cadre de montage, comportant des éléments profilés creux quatre-pans présentant des découpures et des connecteurs amovibles pour deux éléments profilés respectifs de ce type, l'assemblage pouvant être réalisé par une action d'écartement sur les connecteurs, caractérisé en ce que le profilé creux quatre-pans (10) des deux éléments profilés à assembler est pourvu d'une fente longitudinale (12) sur un côté (16) et, au moins sur deux côtés adjacents (18), de moyens (14,15) de blocage en déplacement longitudinal, et en ce que les connecteurs (20,40) présentent deux paires de branches (24), qui sont pourvues d'organes d'écartement (30,32,38), dont la largeur (b) est adaptée, transversalement à la direction d'écartement, à la portée intérieure (w1) du profilé, et qui peuvent être chacune introduites à l'intérieur d'un élément profilé creux (10) afin, lors de l'écartement consécutif, d'amener les organes de crantage (28,29) présents sur le côté extérieur des branches (24) en engagement avec les moyens de blocage précités (14,15), et de réaliser simultanément un engagement positif avec les quatre parois intérieures du profilé.

2. Agencement de cadre de montage selon la revendication 1, caractérisé en ce que le profilé creux quatre-pans (10) est un profilé carré.

3. Agencement de cadre de montage selon la revendication 1 ou 2, caractérisé en ce que des découpures (14), disposées à intervalles réguliers, sont présentes comme moyens de blocage sur les côtés (18) du profilé creux (10).

4. Agencement de cadre de montage selon la revendication 3, caractérisé en ce que les découpures (14) sont carrées.

5. Agencement de cadre de montage selon la revendication 4, caractérisé en ce que la largeur (s) de la fente longitudinale (12) est égale à la longueur des côtés des découpures carrées.

6. Agencement de cadre de montage selon l'une des revendications précédentes, caractérisé en ce qu'une cannelure (15), s'étendant perpendiculairement à la direction longitudinale du profilé, est présente intérieurement comme moyen de blocage sur au moins deux côtés opposés (18) du profilé creux (10').

7. Agencement de cadre de montage selon l'une des revendications précédentes, caractérisé en ce que les connecteurs (20,40) sont chacun constitués d'une paire de pièces sensiblement identiques (22), dont l'espacement peut être modifié au moyen d'au moins un organe d'écartement (30,32,38).

8. Agencement de cadre de montage selon la revendication 7, caractérisé en ce que les pièces des connecteurs sont des éléments coudés (22) présentant deux branches (24) assemblées à angle droit.

9. Agencement de cadre de montage selon la revendication 8, caractérisé en ce que les deux branches (24) des éléments coudés (22) sont entretoisées par une paroi (25) qui les relie.

10. Agencement de cadre de montage selon la revendication 7, caractérisé en ce que chaque pièce de la paire présente deux branches alignées en ligne droite.

11. Agencement de cadre de montage selon la revendication 3 et l'une des revendications 7 à 10, caractérisé en ce que les organes de crantage sont formés sur le côté extérieur des branches (24) par des ergots (28) qui s'engagent dans les découpures (14),

12. Agencement de cadre de montage selon la revendication 11, caractérisé en ce que la hauteur des ergots (28) est au plus égale à l'épaisseur de paroi du profilé.

13. Agencement de cadre de montage selon la revendication 6 et l'une des revendications 7 à 10, caractérisé en ce que les branches (24) des connecteurs (20') présentent sur leur côté extérieur, comme organes de crantage, une cannelure transversale (29) qui s'engage dans la cannelure (15) du profilé (10').

14. Agencement de cadre de montage selon l'une des revendications 8, 9 ou 10, caractérisé en ce qu'un organe d'écartement (30,32,38) est disposé dans la région de chaque paire de branches (24).

15. Agencement de cadre de montage selon la revendication 7, caractérisé en ce que les organes d'écartement (30) sont constitués par une vis de pression (32), qui est montée dans une pièce de la paire et peut être serrée contre l'autre pièce.

16. Agencement de cadre de montage selon la revendication 7, caractérisé en ce que les organes d'écartement (30) sont constitués par un ressort à lame ondulée (38).

17. Agencement de cadre de montage selon la revendication 11 ou 13, caractérisé en ce que la hauteur (h) des branches (24), y compris les organes de crantage (28,29), est inférieure à la largeur (s) de la fente longitudinale (12).

18. Profilé creux quatre-pans pour un agencement de cadre de montage, caractérisé en ce qu'un côté (16) du profilé creux (10) présente une fente longitudinale (12), et au moins les deux côtés adjacents (18) du profilé sont pourvus de moyens (14,15), accessibles de l'intérieur, de blocage en déplacement longitudinal de connecteurs insérés dans des profilés.

19. Profilé creux quatre-pans selon la revendication 18, caractérisé en ce qu'il s'agit d'un profilé carré.

20. Profilé creux quatre-pans selon la revendication 18 ou 19, caractérisé en ce que des découpures (14), disposées à intervalles réguliers, sont présentes comme moyens de blocage dans les côtés du profilé.

21. Profilé creux quatre-pans selon la revendication 20, caractérisé en ce que les découpures sont carrées.

22. Profilé creux quatre-pans selon la revendication 21, caractérisé en ce que la largeur (s) de la fente longitudinale (12) est égale à la longueur des côtés des découpures carrées.

7

23. Profilé creux quatre-pans selon la revendication 18 ou 19, caractérisé en ce qu'une cannelure (15), s'étendant perpendiculairement à la direction longitudinale du profilé, est présente intérieurement comme moyen de blocage.

24. Profilé creux quatre-pans selon l'une des revendications 18 à 23, caractérisé en ce que des moyens de blocage (14,15) sont présents sur tous les côtés (18,19) du profilé quine sont pas occupés par la fente longitudinale (12).

Fig. 1

Fig. 2

Fig. 3

Fig. 4

Fig.7

Fig.6

Fig.5

Fig. 8

Fig. 9

Fig. 10